Europäisches Patentamt

European Patent Office

Office européen des brevets

(19)

(11) Veröffentlichungsnummer: **0 339 128**
**A1**

## (12) EUROPÄISCHE PATENTANMELDUNG

(21) Anmeldenummer: 88117516.0

(22) Anmeldetag: 21.10.88

(51) Int. Cl.⁴: **H01S 3/081**

(30) Priorität: 26.04.88 DE 3813951

(43) Veröffentlichungstag der Anmeldung:
**02.11.89 Patentblatt 89/44**

(84) Benannte Vertragsstaaten:
**DE FR GB IT**

(71) Anmelder: **W.C. Heraeus GmbH**
**Heraeusstrasse 12 - 14**
**D-6450 Hanau / Main(DE)**

(72) Erfinder: **Nitsche, Rainer, Dr.**
**Wilhelm-Leuscher-Strasse 6**
**D-6050 Offenbach(DE)**
Erfinder: **Sebralla, Bruno**
**Tannenweg 3**
**D-6454 Bruchköbel(DE)**
Erfinder: **Malkmus, Rolf**
**Sudetendeutsche Strasse 80**
**D-6450 Hanau(DE)**

(74) Vertreter: **Heinen, Gerhard, Dr.**
**Heraeus Holding GmbH Zentralbereich**
**Patente und Lizenzen Heraeusstrasse 12-14**
**D-6450 Hanau am Main(DE)**

(54) **Laser mit einem Multipass-Resonator.**

(57) Es sind Laser mit einem Multipass-Resonator bekannt, der im Strahlengang zwischen zwei Resonator-Endspiegeln mindestens zwei einander gegenüberliegende Faltungsspiegel (1, 2) mit einander zugekehrten Spiegelflächen (10) aufweist, von denen mindestens eine in ihrer Breite begrenzt ist und mindestens der eine Faltungsspiegel (10) einen Strahlauskopplungsbereich aufweist. Um einen Laser mit Multipass-Resonator anzugeben, der einen Laserstrahl niedriger Ordnung erzeugt, vorzugsweise einem 00-Mode, und die vorstehend aufgezeigten Nachteile vermeidet, ist zur Ausblendung (12, 13) unerwünschter Strahlungsmoden die Spiegelfläche mindestens des einen Faltungsspiegels (10) außerhalb erwünschter Strahlungsmoden in ihrem Reflexionsvermögen vermindert ist.

Fig. 3

Fig. 4

## Laser mit einem Multipass-Resonator

Die Erfindung betrifft einen Laser mit einem Multipass-Resonator, der im Strahlengang zwischen zwei Resonator-Endspiegeln mindestens zwei einander gegenüberliegende Faltungsspiegel mit einander zugekehrten Spiegelfächen aufweist, von denen mindestens eine in ihrer Breite begrenzt ist und mindestens der eine Faltungsspiegel einen Strahlauskopplungsbereich aufweist.

Ein solcher Laser mit Multipass-Resonator ist beispielswiese aus der DE-PS 35 15 679 bekannt. Dieser Laser besitzt eine Innenelektrode, die koaxial von einer rohrförmigen Außenelektrode umgeben ist. Der Ringraum zwischen den beiden Elektroden wird in axialer Richtung von zwei Faltungsspiegeln begrenzt. Solche Multipass-Resonatoren haben den Vorteil, daß eine große Resonatorlänge bei einer geringen Baulänge des Lasers erzielt werden kann, da der Strahl zwischen den Faltungsspiegeln mehrfach umgelenkt wird. Problematisch bei solchen Resonatoren ist die Justierung der beiden Spiegel zueinander sowie die exakte Ausführung der einzelnen Reflexionsflächen auf den Faltungsspiegeln, die sphärische Spiegel sind, derart, daß der Laserstrahl ohne große Abweichung zwischen den beiden Spiegeln reflektiert wird.

Durch die Verwendung von sphärischen Faltungsspiegeln liegen die einzelnen Auftreffpunkte des Laserstrahls auf den Faltungsspiegeln auf einem Kreis mit Radius r bzw. allgemein auf einer Ellipse. Die Stabilitätsbedingung gilt für $0 \leq r$, d.h. die Größe von r ist nicht definiert. Da die Faltungsspiegel rotationssymmetrisch sind, ist auch die Lage der Auftreffpunkte mit dem Umfang nicht festgelegt, d.h. es können prinzipiell beliebig viele Moden anschwingen. Erwünscht ist aber eine Mode niedriger Ordnung, vorzugsweise ein 00-Grundmode.

Bereits geringe Abweichungen von einer exakten Justierung führen dazu, daß der Strahl an den Spiegelflächen undefiniert reflektiert wird und dadurch unerwünschte Moden anschwingen können. Um unerwünschte Moden auszublenden, ist es üblich, vor den Faltungsspiegeln zur Modenbegrenzung als zusätzliche Bauteile Modenblenden in Form von durchbohrten Scheiben anzuordnen, die das Auftreffen der Strahlung nur auf vorgegebene Bereiche der Faltungsspiegel zulassen.

Bei einem Multipass-Resonator trifft der Laserstrahl im schrägen Winkel auf die Faltungsspiegel auf. Um eine kreisförmige Mode zu erhalten, muß demzufolge die Blende eine entsprechende Kontur aufweisen oder möglichst nahe an den spiegelnden Flächen sein und kann nicht, wie bei einem ungefalteten Resonator an beliebiger Stelle im Resoantor positioniert werden.

Eine Scheibe mit Bohrungen, wie sie für die bekannten Laser mit Multipass-Resonator verwendet wird, hat die Nachteile, daß die Oberflächen der Spiegel beim Einbau beschädigt werden können. Auch kann durch die intensive Stahlung Material von der Blende auf die Spiegelflächen abdampfen.

Ausgehend von dem vorstehenden beschriebenen Stand der Technik liegt der vorliegenden Erfindung die Aufgabe zugrunde, einen Laser mit Multipass-Resonator anzugeben, der einen Laserstrahl niedriger Ordnung erzeugt, vorzugsweise einen 00-Mode, und die vorstehend aufgezeigten Nachteile vermeidet.

Die Aufgabe wird erfindungsgemäß dadurch gelöst, daß zur Ausblendung unerwünschter Strahlungsmoden die Spiegelfläche mindestens des einen Faltungsspiegels außerhalb der erwünschten Strahlungsmoden in ihrem Reflexionsvermögen vermindert ist. nie Oberfläche der Spiegel ist derart gestaltet, daß nur die Flächenteile reflektieren, die von dem geforderten Mode ausgeleuchtet werden. Die Modeblende wird also direkt in oder auf der Spiegelfläche ausgeführt, so daß keine gesonderten Bauteile erforderlich sind. Die Modenblende kann mit dem Bearbeiten der Spiegelfläche erfolgen, so daß eine Beschädigung der Spiegelfläche durch den Einbau einer Modenblende praktisch unmöglich ist. Die Verminderung des Reflexionsvermögens der Spiegelfläche kann durch eine Aufrauhung der Oberfläche des Spiegelkörpers erfolgen, wozu bei der Herstellung beispielsweise die Reflexionsfläche abgedeckt und der Spiegelkörper geätzt oder sandgestrahlt wird. In gleicher Weise kann auf die die Moden begrenzenden Bereiche des Spiegelkörpers eine das Reflexionsvermögen herabsetzende Schicht aufgebracht werden. Je nach Abstand der einzelnen Reflexionsflächen eines Faltungsspiegels zueinander besteht die Möglichkeit, die nicht zur Reflexion dienenden Bereiche mit Bohrungen zu versehen. Falls die einzelnen Reflexionsflächen im wesentlichen kreisförmige Spiegelflächen sind, die sehr dicht aneinandergrenzen, kann es bereits ausreichend sein, daß beidseitig der Mittellinie jeweils eine Sack- lochbohrung ausgeführt wird. Die vorstehend beschriebenen Möglichkeiten, die Modenblenden gemäß der Erfindung auszuführen, sind nicht nur auf Multipass-Resonatoren mit koaxialer Anordnung der Elektroden beschränkt, sondern sie kann ebenso an Spiegeln für Multipass-Resonatoren verwirklicht werden, bei denen der Strahl in einer Ebene mehrfach gefaltet verläuft. Auch bei dieser Art der Resonatoren besteht das Problem, daß der Laserstrahl nicht senkrecht auf die Spiegel auftrifft.

Weitere Einzelheiten und Merkmale der Erfindung ergeben sich aus der nachfolgenden Beschreibung eines Ausführungsbeispieles anhand der Zeichnung. In der Zeichnung zeigt

Figur 1 schematisch einen Multipass-Resonator mit koaxialer Anordnung der Elektroden,

Figur 2 einen Faltungsspiegel, wie er beispielsweise in einer Anordnung nach Figur 1 einsetzbar ist

Figur 3 und Figur 4 die ringförmigen Spiegelflächen der beiden Faltungsspiegel der Anordnung nach Figur 1 mit Modenblenden.

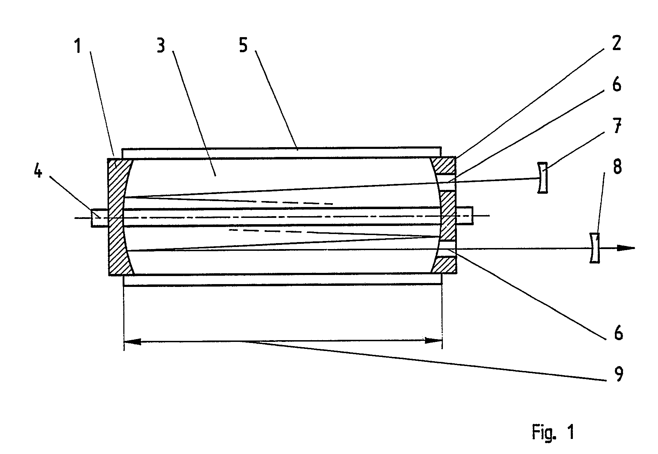

Der Laser, wie er in der Figur 1 gezeigt ist, weist zwei Multipass-Spiegel 1, 2 auf, die den Anregungsraum 3, der zwischen einer Innenelektrode 4 und einer koaxial zur Innenelektrode mit Abstand zu dieser angeordneten Außenelektrode 5 gebildet ist, begrenzen. Der linke der beiden Multipass-Faltungsspiegel 1, 2 besitzt zwei Öffnungen 6, hinter denen jeweils ein Resonator-Endspiegel 7, 8 angeordnet ist. Der Resonator-Endspiegel 8 ist für die Strahlung teilweise durchlässig. Die Länge eines solchen Multipass-Resona- tors wird durch die Strecke des Strahles zwischen den beiden Resonator-End- spiegeln 7, 8 festgelegt, d.h. durch die Summe der Länge 9 der Einzeldurchläufe des Strahles zwischen den beiden Multipass-Spiegeln 1, 2 und dem Abstand der beiden Resonator-Endspiegeln 7, 8 zu dem Multipass-Spiegel 2.

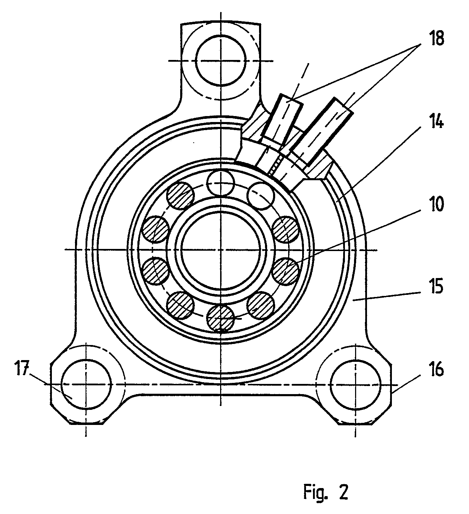

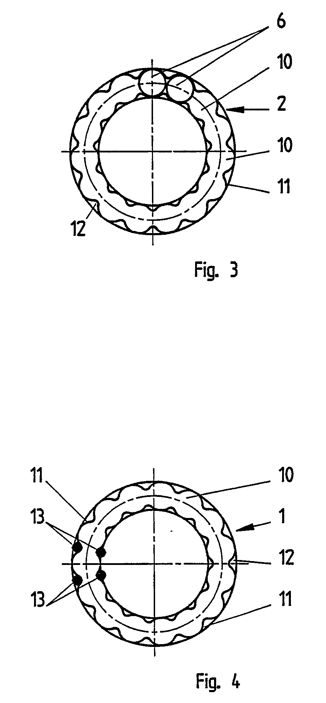

Die Spiegelflächen der beiden Multipass-Spiegel 1, 2 sind sphärische Ringflächen, wie dies die Figuren 2 bis 4 zeigen. Der Strahl läuft von dem einen Resonator-Endspiegel 7 durch die eine Öffnung 6 und von dort jeweils im Wechsel durch den Ringraum 3 zwischen den einzelnen Spiegelflächen 10 zum Endspiegel 8. Die einzelnen Spiegelflächen 10 liegen entsprechend den Figuren 3 und 4, sehr dicht aneinandergrenzend nebeneinander, während in Figur 2 die Spiegelflächen 10 weiter auseinander liegen. Sowohl an der Außenseite als auch an der Innenseite der ringförmigen Spiegelfläche verbleiben Bereiche, durch die Konturlinien 11 angedeutet, die außerhalb der gewünschten Moden liegen. Diese Bereiche 12 sind aufgerauht, so daß die Reflexionseigenschaften dort wesentlich vermindert sind. In radialer Richtung sind die Spiegelflächen 10 bereits durch die Breite der Ringflache begrenzt. Die Bereiche 12 können auch ausgefräst werden, so daß sie wesentlich tiefer liegen als die Spiegelflächen 10. Solche Vertiefungen können bereits im Spiegelrohling vor der Politur ausgeführt werden.

In Figur 4 sind in der linken Hälfte des Multipass-Spiegels 1 einzelne Sacklochbohrungen 13 im Grenzbereich zwischen jeweils zwei benachbarten Spiegelflächen 10 angedeutet, die anstelle der aufgerauhten Bereiche 12 vorgesehen werden können und bereits in Einzelfällen ausreichend sind, um den Laser nur in niedrigen Moden anschwingen zu lassen.

Der Spiegel, wie er in Figur 2 zu sehen ist, besitzt einen Spiegelkörper 14, der an einem Flansch 15 befestigt ist. Der Flansch 15 weist drei Befestigungsvorsprünge 16 auf mit Bohrungen 17 auf, durch die nicht näher dargestellte Invar-Stäbe geführt sind, um an diesen Invar-Stäben die Faltungsspiegel bzw. Endspiegel zu haltern. Weiterhin sind zur Kühlung des Spiegelköpers 14 Kühlmittelzu- und abfuhrstutzen 18 vorgesehen. Die Ringfläche dieses Spiegels weist einzelne Spiegelflächen 10 auf, die mit größerem Abstand zueinander verteilt sind.

## Ansprüche

1. Laser mit einem Multipass-Resonator, der im Strahlengang zwischen zwei Resonator-Endspiegeln mindestens zwei einander gegenüberliegende Faltungsspiegel mit einander zugekehrten Spiegelflächen aufweist, von denen mindestens eine in ihrer Breite begrenzt ist und mindestens der eine Faltungsspiegel einen Strahlauskopplungsbereich aufweist, dadurch gekennzeichnet, daß zur Ausblendung unerwünschter Strahlungsmoden die Spiegelfläche (10) mindestens des einen Faltungsspiegels (1, 2) außerhalb erwünschter Strahlungsmoden in ihrem Reflexionsvermögen vermindert ist.

2. Laser nach Anspruch 1, dadurch gekennzeichnet, daß die Bereiche verminderten Reflexionsvermögen durch aufgerauhte Flächen gebildet sind.

3. Laser nach Anspruch 1, dadurch gekennzeichnet, daß die Bereiche verminderten Reflexionsvermögens durch reflexionsmindernde Schichten gebildet sind.

4. Laser nach Anspruch 1, dadurch gekennzeichnet, daß die Bereiche verminderten Reflexionsvermögens durch eine Vielzahl von Bohrungen gebildet sind.

5. Laser nach Anspruch 4, dadurch gekennzeichnet, daß die Bohrungen Sacklochbohrungen (13) sind.

6. Laser nach einem der Ansprüche 1 bis 5, dadurch gekennzeichnet, daß die Gesamtspiegelfäche eines Faltungsspiegels (1, 2) aus mehreren im wesentlichen kreisförmigen Spiegelflächen zusammengesetzt ist.

Fig. 1

Fig. 2

EP 0 339 128 A1

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 530 900 (WESTERN ELECTRIC) * Seiten 4,5; Figuren 1-7 * | 1-4,6 | H 01 S 3/081 |
| X | EP-A-0 073 992 (HITACHI) * Seite 2; Zusammenfassung; Figuren 3A,3B,4 * | 1,6 | |
| X | PATENT ABSTRACTS OF JAPAN, Band 6, Nr. 9 (E-90)[887], 20. Januar 1982; & JP-A-56 131 983 (MITSUBISHI DENKI K.K.) 15-10-1981 * Insgesamt * | 1,6 | |

| | | | RECHERCHIERTE SACHGEBIETE (Int. Cl.4) |
|---|---|---|---|
| | | | H 01 S |

Der vorliegende Recherchenbericht wurde für alle Patentansprüche erstellt

| Recherchenort | Abschlußdatum der Recherche | Prüfer |
|---|---|---|
| DEN HAAG | 22-03-1989 | MALIC K. |